**(19)** Europäisches Patentamt

European Patent Office

Office européen des brevets

**(11)** Numéro de publication : **0 383 652 B1**

## **(12)** FASCICULE DE BREVET EUROPEEN

**(45)** Date de publication du fascicule du brevet :
**01.06.94 Bulletin 94/22**

**(51)** Int. Cl.$^5$ : **B23B 35/00**

**(21)** Numéro de dépôt : **90400332.4**

**(22)** Date de dépôt : **07.02.90**

**(54)** Procédé de perçage d'une plaque à très grande densité de trous et de configuration quelconque, et produits résultants.

**(30)** Priorité : **13.02.89 FR 8901832**

**(43)** Date de publication de la demande :
**22.08.90 Bulletin 90/34**

**(45)** Mention de la délivrance du brevet :
**01.06.94 Bulletin 94/22**

**(84)** Etats contractants désignés :
**DE ES GB IT**

**(56)** Documents cités :
**DE-B- 1 273 957
FR-A- 2 372 672
GB-A- 279 643
GB-A- 1 009 685
US-A- 2 378 618
PATENT ABSTRACTS OF JAPAN, vol. 7, no.
179 (M-234)[1324], 9 août 1983; & JP-A-58 82
612 (HITACHI SEISAKUSHO K.K.) 18-05-1983**

**(73)** Titulaire : **SOCIETE DE CONSTRUCTION DES
AVIONS HUREL-DUBOIS
13 à 21, avenue du Maréchal Juin
F-92360 Meudon la Forêt (FR)**

**(72)** Inventeur : **Theret, Patrice
28, avenue Baudoin
F-93350 Le Bourget (FR)**
Inventeur : **Jouan, Jean-Alain
1, rue du Pavé de Meudon
F-92370 Chaville (FR)**

**(74)** Mandataire : **Sauvage, Renée
Cabinet Sauvage
100 bis, avenue de Saint-Mandé
F-75012 Paris (FR)**

EP 0 383 652 B1

## Description

La présente invention concerne un procédé de perçage d'une plaque devant présenter, après usinage, un grand nombre de trous de petit diamètre et d'entr'axes faibles représentant une densité de perforation élevée, de l'ordre de plusieurs dizaines de milliers de trous par mètre carré.

En général, la réalisation de plaques perforées de ce type pose des problèmes difficiles à surmonter. En effet, toutes les techniques utilisées jusqu'à présent se sont révélées soit peu commodes à mettre en oeuvre techniquement, soit onéreuse, soit trop lentes pour permettre une exploitation industrielle.

Ainsi, la technique de perforation par poinçonnage permet théoriquement la réalisation d'un grand nombre de perforations simultanément mais peut entraîner selon le type de matériau des déformations de la plaque et donc une détérioration ; de plus il est impossible de travailler sur des plaques ayant des parties courbes.

Lorsque l'on veut utiliser une technique de perçage par forage, on est amené, en raison de l'entr'axe très faible des trous à percer, à travailler avec un seul outil de perçage (foret, ou laser et jet d'eau pour les matériaux plastiques), ce qui entraîne des temps d'exécution extrêmement longs et peu rentables.

Il a toutefois été proposé (FR-A-2 372 672) un procédé de perçage utilisant une batterie de forets qui, entre chaque opération de perçage, est relevée et décalée d'un pas le long d'une première ligne dans un sens donné, puis en bout de ligne est décalée du même pas dans une direction faisant un angle avec ladite ligne et de nouveau actionnée (perçage, relevage, décalage d'un pas le long d'une ligne parallèle à la précédente mais dans le sens opposé), et ainsi de suite, jusqu'à ce que chaque foret ait percé une surface délimitée, d'un côté, par ladite première ligne et ladite direction faisant un angle avec elle. Dans ce procédé connu, la batterie d'outils a un encombrement superficiel sensiblement égal à la superficie de la plaque devant être perforée. Cette technique implique donc un outillage lourd par rapport à la surface à travailler.

Certaines techniques de perçage, notamment pour des plaques en matériaux à base de fibres noyées dans des résines, ont été proposées récemment. Ces techniques consistent à appliquer un masque pré-perforé sur la plaque et à réaliser le perçage par abrasion. On réalise ainsi plusieurs dizaines de trous simultanément. Toutefois cette technique est lente, onéreuse, polluante, et surtout ne permet pas de maîtriser la géométrie et le diamètre des trous réalisés.

La présente invention vise un nouveau procédé de perçage d'une plaque à grande densité de perforations qui élimine les inconvénients des techniques connues en permettant une parfaite maîtrise de la géométrie et du diamètre des trous, une grande régularité de leur espacement, une absence d'efforts déformants et une possiblité de perçage aussi bien de surfaces planes que de surfaces courbes, convexes ou concaves. Ce nouveau procédé utilise, comme FR-A-2 372 672, une batterie d'outils mais, de telle façon, que l'encombrement de la batterie n'est en aucune manière lié à la superficie de la plaque à perforer.

Plus précisement, le procédé selon l'invention utilise une batterie de N outils agissant simultanément, laquelle batterie de N outils est déplaçable pas à pas, à partir d'une position de départ, pour assurer simultanément le perçage d'un nombre N de perforations d'un diamètre "e", les N outils de la batterie étant disposés dans un plan défini par un premier et un second axes x et y, et il consiste :
- à disposer les N outils de la batterie de telle sorte
  . que les outils voisins, selon une direction parallèle à l'axe x, soient écartés les uns des autres d'une distance dx , cette distance dx étant un multiple d'un pas px, px étant la distance devant séparer deux perforations voisines une fois que la plaque est totalement perforée, dans la direction parallèle à l'axe x, et que
  . les outils voisins, selon une direction parallèle à l'axe y, soient écartés les uns des autres d'une distance dy, , cette distance dy étant un multiple d'un pas py, py étant la distance devant séparer deux perforations voisines une fois que la plaque est totalement perforée, dans la direction parallèle à l'axe y,
       les N outils de la batterie d'outils occupant une surface Dx.Dy, où Dx est orienté selon l'axe x et est un multiple de la distance dx et où Dy est orienté selon l'axe y et est un multiple de la distance dy, et
- à percer la plaque tandis que la batterie de N outils est dans la position de départ
- à déplacer la batterie depuis la position de départ sur une zone élémentaire Z de la plaque, ladite zone élémentaire couvrant une surface Lx.Ly supérieure à la surface Dx.Dy, Lx étant parallèle à l'axe x et Ly étant parallèle à l'axe y, le mouvement de la batterie de N outils étant effectué selon une première séquence de déplacements de pas px dans une direction parallèle à l'axe x et de déplacements de pas py dans une direction parallèle à l'axe y,
- à percer la plaque après chaque déplacement de pas px et py, jusqu'à ce que la zone élémentaire Z soit entièrement perforée,

Le procédé selon l'invention se distingue toutefois du procédé connu par le fait que l'encombrement de la batterie d'outils n'est aucunement lié à la superficie de la plaque à perforer et par le fait qu'il prévoit des mesures propres aux plaques presentant des zones courbes.

Ainsi, le procédé selon l'invention est caractérisé en ce qu'il consiste, pour rendre l'éncombrement de la batterie d'outils indépendant de la superficie de la plaque :

- à déplacer d'un second pas l'ensemble de la batterie de N outils selon une seconde séquence de déplacement, selon l'un des axes x et y du plan, ledit second pas étant tel que la distance entre la position de départ et une position après ledit second pas est égale à (Lx + px), pour une second pas selon l'axe x , et de (Ly + py), pour un second pas selon l'axe y, ledit second pas étant en outre tel que la distance entre la position de départ et la position après le second pas est égale à (Dx + dx) pour un pas selon l'axe x et égale à (Dy + dy) pour un pas selon l'axe y,
- à percer la plaque après chaque second pas, et
- à répéter la première et la seconde séquences jusqu'à ce que la plaque soit totalement perforée, étant entendu que la position de la batterie de N outils après un second pas donné constitue la position de départ pour une nouvelle série de première et deuxième séquences,

le procédé étant en outre caractérisé en ce que, pour opérer le perçage dans des zones courbes de la plaque, on diminue le nombre d'outils actifs de telle manière que, le plan constitué par la batterie étant tangent à la zone courbe, l'axe de la perforation opérée par les outils actifs les plus périphériques soit incliné de moins d'une valeur maximale admissible par rapport à la normale (H) à la courbe en ce point, les outils maintenus inactifs étant situés à la périphérie de la batterie d'outils.

La distance dx d'écartement entre les outils voisins dans la direction parallèle à l'axe x et la distance dx d'écartement entre les outils voisins dans la direction parallèle à l'axe y correspondent, respectivement, à l'entraxe minimal pouvant séparer deux outils voisins dans la direction parallèle à l'axe x et dans la direction parallèle à l'axe y, compte tenu du diamètre "e" des perforations à réaliser.

De préférence, dans la première séquence de déplacement des outils, le déplacement de ceux-ci s'effectue selon un motif géométrique régilier choisi par exemple parmi les figures géométriques simples.

L'invention peut s'appliquer à l'usinage de plaques en un matériau quelconque (métal, plastique, ou matériaux à base de fibres synthétiques enrobées de résine). De plus, si elle est adaptée au travail de plaques planes, elle trouve tout son intérêt, comme indiqué plus haut, pour le perçage de plaque de surface quelconque présentant des zones à rayons de courbure convexes, concaves, et complexes.

Le procédé selon l'invention peut être appliqué de façon particulièrement intéressante dans le cas de fabrication de peaux perforées en matériau composite, c'est-à-dire à base de fibres synthétiques noyées dans une résine, notamment les peaux perforées entrant dans la composition de panneaux acoustiques destinés à équiper les nacelles de moteurs d'avions.

On sait que ces panneaux sont constitués d'une peau perforée, supportée par un matériau d'âme alvéolaire, du type nid d'abeille dont la face opposée est fixée à une peau pleine, le tout formant des chambres absorbantes et étant en général assemblé par collage. La peau perforée présente une multitude de trous de petit diamètre dont les entr'axes sont calculés de façon à obtenir un rapport entre la surface totale des orifices et la surface totale de la zone perforée qui permette l'effet d'absorption acoustique recherché. Habituellement, la densité de perforations est très élevée (plusieurs dizaines de milliers de trous par mètre carré).

Dans le cas de fabrication d'un tel type de panneau, la peau en matériau composite ne peut être perforée qu'après avoir été mise en forme préalablement. Le procédé de l'invention est tout à fait adapté à un tel cas pour lequel il a d'ailleurs été étudié.

Les moyens permettant de mettre en oeuvre le procédé de l'invention comportent les éléments principaux suivants :

- une batterie d'outils permettant l'enlèvement de matière (foret, buse pour jet d'eau, jet abrasif, laser)
- un système porte-outils d'une configuration adaptée au type de perforations à réaliser
- une machine de type "à commande numérique" ou équivalente, autorisant le positionnement et le déplacement dans l'espace de l'ensemble porte-outils
- un logiciel capable de gérer l'ensemble ainsi constitué en fonction de la géométrie de la plaque à usiner.

On décrira à présent le procédé de l'invention à titre d'exemple non limitatif, en référence aux dessins annexés dans lesquels :

- la figure 1 est une coupe d'un panneau d'insonorisation acoustique, à échelle agrandie, destiné à équiper des parties d'avion, notamment la nacelle d'un moteur ;
- les figures 2, 3 et 4 sont des schémas permettant d'expliquer le procédé selon l'invention ;
- les figures 5, 6 et 7 sont des schémas montrant la mise en oeuvre du procédé pour le perçage d'une plaque à surface complexe, et
- la figure 8 est un schéma montrant comment les perforations sont réalisées dans une zone courbe d'une plaque.

L'invention ayant été mise au point dans le cadre de réalisation de panneaux d'insonorisation destinés à être utilisés dans les moteurs d'avions, la description qui suit s'appuiera, à titre d'exemple, sur ce cas particulier. Il est cependant évident que l'invention pourrait être utilisée pour d'autres applications et de façon générale, pour le perçage de plaques de conformation quelconque devant présenter une densité de perforation élevée.

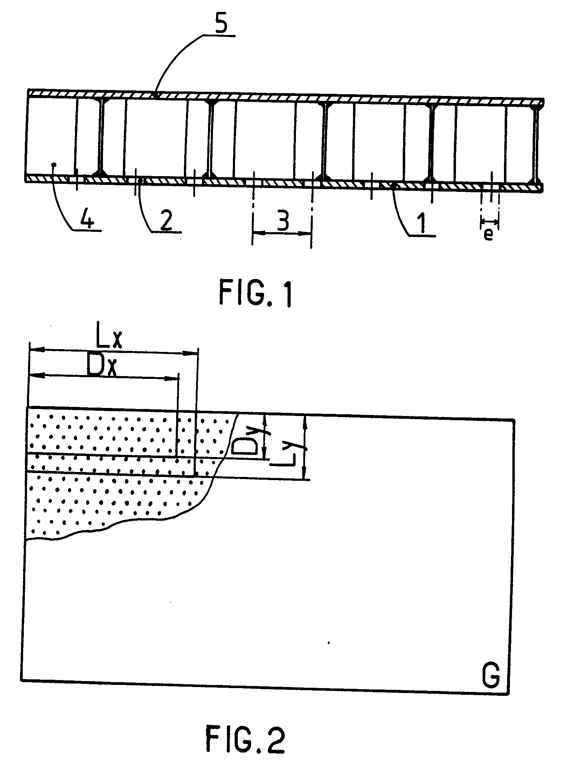

Les panneaux d'insonorisation sont en général constitués de la manière représentée à la figure 1 et comportent :
- une peau perforée 1 présentant une multitude de trous 2 de petits diamètres et d'entraxes 3 calculés de façon à obtenir un rapport surface d'orifices sur surface totale perforée du panneau permettant l'effet d'absorption acoustique recherché
- un matériau d'âme alvéolaire 4 du type nid d'abeille
- et une peau pleine 5 destinée à fermer les chambres absorbantes formées entre la peau perforée 1 et le matériau 4.

Ces trois éléments sont fixés l'un à l'autre par exemple par collage.

Les peaux 1 et 5 peuvent être réalisées soit an alliage métallique léger, soit en un matériau à base de fibres (carbone, verre, bore, aramide ...) noyées dans une résine.

Dans ce cas, la peau 1 doit nécessairement être moulée en forme et être ensuite perforée.

C'est plus particulièrement à ce dernier cas de peaux en composite que le procédé de l'invention s'applique afin de réaliser des séries de plusieurs perforations simultanées.

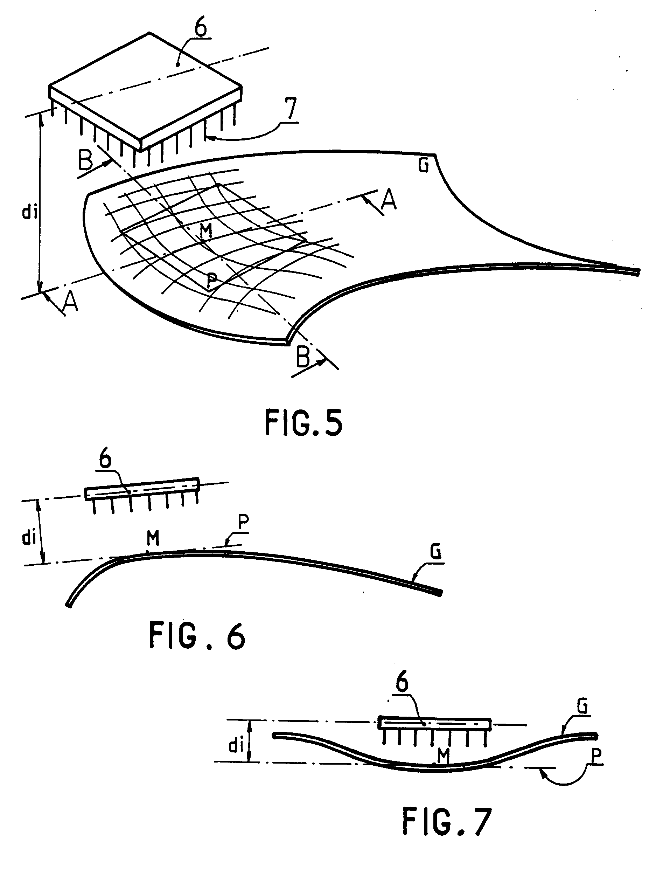

Pour la mise en oeuvre du procédé, on utilise une machine de type "à commande numérique", ou équivalente, autorisant le déplacement et le positionnement dans l'espace d'un ensemble porte-outils tel que celui schématisé en 6 dans les figures 5 à 7, cet ensemble 6 portant une batterie d'outils 7 permettant l'enlèvement de matière (foret, jet d'eau, jet abrasif, laser ...) et ayant une configuration adaptée aux perforations à réaliser. L'ensemble est géré par un logiciel.

Selon la forme préférée de réalisation qui va être décrite maintenant, les outils 7 sont constitués par des forets.

Comme on le voit aux figures 5 à 7, la plaque à perforer est réalisée en matériau composite rigide mis en forme préalablement. Sa surface (dans l'exemple représenté, une surface complexe à double courbure) est définie en tous points et s géométrie fait l'objet de données informatiques transférables et manipulables par le logiciel gérant la machine mettant en oeuvre le procédé.

Pendant l'opération de perçage, la position de l'ensemble porte-outils 6, qu'il soit en phase de déplacement ou immobilisé pour réaliser ce perçage, est pris en compte par le logiciel relativement à un référentiel lié à la plaque à perforer (ou à l'outillage qui la supporte et la positionne).

Dans l'exemple représenté, on souhaite réaliser un panneau dont la peau perforée 1 doit présenter les caractéristiques suivantes :
- rapport $\dfrac{\text{surface totale des perforations}}{\text{surface traitée}} = 8{,}42\ \%$
- diamètre des trous = 1,5 mm

Dans un tel cas, on obtient par calcul une densité de perforation de 47.700 trous par m². Si les trous de deux rangées successives sont disposés en quinconce, c'est-à-dire selon un motif élémentaire qui est un triangle équilatéral, la distance entre deux trous consécutifs ou pas "p" est alors de 4,92 mm.

Pour percer de tels trous avec des forets de perçage, on utilise des broches d'un diamètre de 35 mm de diamètre et deux trous consécutifs d'une même rangée percés simultanément seront donc écartés au minimum de 8 "p", c'est-à-dire d'environ 4,92 mm x 8 = 39,36 mm.

Pour exposer le procédé simplement, on a considéré que l'on souhaite percer la totalité d'une surface plane G comme celle de la figure 2. Une batterie de six forets F (deux rangs de trois forets) délimite un encombrement d'outils de surface Dx - Dy selon les deux axes du plan.

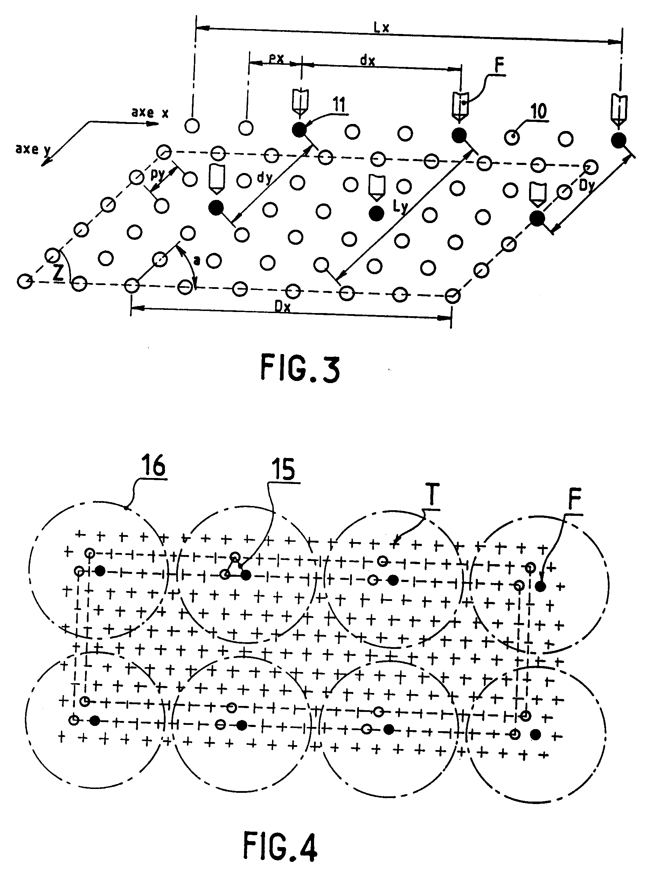

Sur la figure 3, on a représenté à l'échelle agrandie une zone élémentaire Z (figure 2) à perforer. Les cercles blancs 10 représentent l'ensemble des perforations à réaliser dans cette zone Z. Les six cercles noirs 11 sont les perforations réalisées par les forets F à l'instant $t_0$.

Les significations des autres lettres des figures 2 et 3 sont les suivantes :

px : pas entre deux perforations successives selon l'axe x du plan

py : pas entre deux perforations successives selon l'axe y du plan

dx et dy : écartement entre deux forets F consécutifs, respectivement selon les axes x et y du plan.

Pour percer la totalité de la zone Z, on procède à une première séquence de :

$$nx = \frac{dx}{px} \text{ ou } ny = \frac{dy}{py}$$

déplacements successifs de la batterie d'outils. En d'autres termes, après perforation des trous 11, on relève l'ensemble de la batterie de forets, on la translate selon l'axe x d'une distance px, et à l'instant $t_1$, on perfore une seconde série de trous. Puis après relèvement des outils, on les translate d'une distance py selon l'axe y et ainsi de suite, jusqu'à ce que tous les trous 10 entre les trous 11 percés initialement soient perforés. Dans le cas de la figure 3, nx ou ny est égal à 3.

L'ensemble des déplacements selon cette première séquence couvre donc la zone élémentaire Z de dimension Lx par Ly et de surface Z = Lx/Ly.sin a (a étant l'angle formé par les axes x et y du plan selon lesquels se déplacent les outils).

Si le nombre d'outils selon les axes x et y sont respectivement Nx et Ny, alors :

$$Lx = (Nx.nx - 1) \, px$$
$$Ly = (Ny.ny - 1) \, py$$

Dans la figure 3, par mesure de clarté, on n'a représenté que deux perforations 10 à réaliser entre deux forets F consécutifs mais dans le cas de l'exemple rappelé plus haut d'un écartement de 8 "p" entre deux forets, on comprend que le nombre de trous 10 à réaliser serait de 7 et que le nombre de déplacements des outils pour percer une rangée de trous serait également de 7 déplacements.

La platine 6 porte-outils, orientée ou translatée selon n'importe quelle direction, est située lors de son déplacement à une distance constante "di" (figures 5 à 7) par rapport à la pièce à usiner, le plan de la platine étant constamment parallèle au plan P tangent en M à la surface G de la pièce qui peut être convexe (figure 6 selon la coupe A-A de la figure 5) ou concave (figure 7 selon la coupe B-B de la figure 5). On évite ainsi tout mouvement inutile de la platine 6 et donc toute perte de temps entre deux perforations successives. Le dimensionnement préalable de la platine porte-outils sera établi en fonction de la géométrie des pièces à usiner de façon que le maximum d'outils soit utilisé pour une zone à perforer en une seule passe qui soit la plus grande possible.

Les outils sont fixés à la platine de façon à correspondre d'une part à un motif élémentaire de perforation et d'autre part à l'encombrement de chaque outil, l'écartement entre deux outils étant égal à un multiple du pas séparant deux trous consécutifs.

Le motif élémentaire de perforation peut être quelconque mais on choisira de préférence des figures géométriques simples telles que triangle isocèle, rectangle, hexagone. Ainsi, à la figure 4, on a représenté des perforations T effectuées selon un motif élémentaire 15 triangulaire, les outils ou forets étant schématisés en F et les broches porte forets en trait interrompu en 16.

On notera que le procédé permet d'assurer des perforations simultanées en nombre variable en rendant actifs ou non certains outils de la platine, ce que s'impose notamment lorsqu'on travaille sur des courbes courtes comme représentées aux figures 6 et 7. En effet, en toute zone de la pièce G, il est possible de déterminer un rayon de courbure moyen par le calcul. Le logiciel de la machine compare alors la valeur du rayon de courbure dans cette zone avec le nombre d'outils potentiellement actifs sur la platine. Le choix du nombre d'outils actifs compte-tenu de la géométrie considérée est fait automatiquement, le maximum d'outils étant bien sûr souhaitable pour des raisons de rendement.

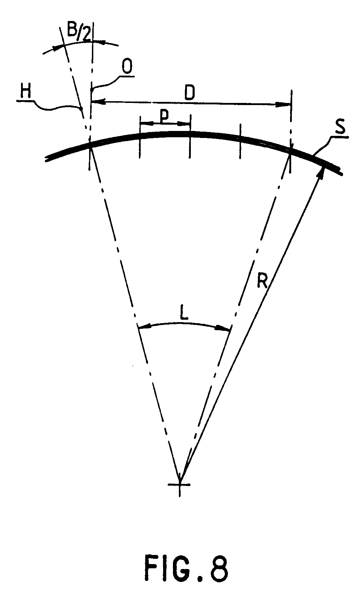

La figure 8 est un schéma montrant comment cette détermination du nombre d'outils est réalisée.

Dans la zone S courbe que l'on veut percer (qui peut être une surface à plusieurs rayons de courbure), on choisit le rayon de courbure R le plus faible. Etant donné l'angle :

$$\frac{B}{2}$$

maximum admissible (par exemple moins de 10°) dont l'axe 0 d'un trou peut s'écarter de la normale H à la surface à l'endroit du trou, l'angle L de la zone sur laquelle on pourra percer est déterminé par la machine.

L'encombrement total D des outils, c'est-à-dire la distance devant séparer les deux outils actifs les plus extrêmes, est égal à D = 2R x tg (B/2). Comme D = (Nn-1) p, N étant le nombre d'outils, et "p" l'entr'axe des trous à perforer, le nombre optimum N' d'outils à utiliser sera inférieur ou égal à (D/p+1)/n, "n" étant le rapport entre la distance séparant deux outils consécutifs et le pas élémentaire.

## Revendications

1. Procédé de perçage d'une plaque devant présenter, une fois terminée la mise en oeuvre dudit procédé, une densité de perforations de l'ordre de plusieurs dizaines de milliers de trous par mètre carré, ledit perçage étant effectué au moyen d'une batterie de N outils agissant simultanément, laquelle batterie de N outils est déplaçable pas à pas, à partir d'une position de départ, pour assurer simultanément le perçage d'un nombre N de perforations d'un diamètre "e", les N outils de la batterie étant disposés dans un plan défini par un premier et un second axes x et y, qui consiste :
   - à disposer les N outils de la batterie de telle sorte

. que les outils voisins, selon une direction parallèle à l'axe x, soient écartés les uns des autres d'une distance dx , cette distance dx étant un multiple d'un pas px, px étant la distance devant séparer deux perforations voisines une fois que la plaque est totalement perforée, dans la direction parallèle à l'axe x, et que

. les outils voisins, selon une direction parallèle à l'axe y, soient écartés les uns des autres d'une distance dy, cette distance dy étant un multiple d'un pas py, py étant la distance devant séparer deux perforations voisines une fois que la plaque est totalement perforée, dans la direction parallèle à l'axe y,

les N outils de la batterie d'outils occupant une surface Dx.Dy, où Dx est orienté selon l'axe x et est un multiple de la distance dx et où Dy est orienté selon l'axe y et est un multiple de la distance dy

- à percer la plaque tandis que la batterie de N outils est dans la position de départ,
- à déplacer la batterie depuis la position de départ sur une zone élémentaire Z de la plaque, ladite zone élémentaire couvrant une surface Lx.Ly supérieure à la surface Dx.Dy, Lx étant parallèle à l'axe x et Ly étant parallèle à l'axe y, le mouvement de la batterie de N outils étant effectué selon une première séquence de déplacements de pas px dans une direction parallèle à l'axe x et de déplacements de pas py dans une direction parallèle à l'axe y,
- à percer la plaque après chaque déplacement de pas px et py, jusqu'à ce que la zone élémentaire Z soit entièrement perforée,

caractérisé en ce qu'il consiste,

- à déplacer d'un second pas l'ensemble de la batterie de N outils selon une seconde séquence de déplacement, selon l'un des axes x et y du plan, ledit second pas étant tel que la distance entre la position de départ et une position après ledit second pas est égale à (Lx + px), pour une second pas selon l'axe x , et de (Ly + py), pour un second pas selon l'axe y, ledit second pas étant en outre tel que la distance entre la position de départ et la position après le second pas est égale à (Dx + dx) pour un pas selon l'axe x et égale à (Dy + dy) pour un pas selon l'axe y,
- à percer la plaque après chaque second pas, et
- à répéter la première et la seconde séquences jusqu'à ce que la plaque soit totalement perforée, étant entendu que la position de la batterie de N outils après un second pas donné constitue la position de départ pour une nouvelle série de première et deuxième séquences,

le procédé étant en outre caractérisé en ce que, pour opérer le perçage dans des zones courbes de la plaque, on diminue le nombre d'outils actifs de telle manière que, le plan constitué par la batterie étant tangent à la zone courbe, l'axe de la perforation opérée par les outils actifs les plus périphériques soit incliné de moins d'une valeur maximale admissible par rapport à la normale (H) à la courbe en ce point, les outils maintenus inactifs étant situés à la périphérie de la batterie d'outils.

2. Procédé selon la revendication 1, caractérisé en ce que la distance dx d'écartement entre les outils voisins dans la direction parallèle à l'axe x et la distance dans la direction parallèle à l'axe y correspondent, respectivement, à l'entraxe minimal pouvant séparer deux outils voisins dans la direction parallèle à l'axe x et dans la direction parallèle à l'axe y, compte-tenu du diamètre "e" des perforations à réaliser.

3. Procédé selon la revendication 1 ou 2, caractérisé en ce que dans la première séquence de déplacement des outils, le déplacement de ceux-ci s'effectue selon un motif géométrique régulier (15) choisi de préférence parmi les figures géométriques simples.

4. Procédé selon l'une quelconque des revendications précédentes, caractérisé en ce que le positionnement de la batterie d'outils (7) par rapport à la plaque à perforer, ainsi que ses déplacements selon les séries déterminées des deux séquences de déplacement sont gérés par un programme d'ordinateur.

5. Procédé selon l'une quelconque des revendications précédentes, caractérisé en ce qu'il est appliqué à la perforation de plaques en matériaux à base de fibres synthétiques noyées dans une résine, les perforations étant réalisées par enlèvement de matière.

6. Procédé de réalisation de panneaux acoustiques comportant un peau perforée (1) fixée sur une face d'un matériau d'âme alvéolaire (4) dont l'autre face est couverte d'une peau pleine (5), caractérisé en ce que la peau perforée (1) est réalisée en matériau composite à base de fibres noyées clans une résine qui est mise en forme puis perforée selon le procédé des revendications 1 ou 2 avant d'être fixée à l'âme alvéolaire.

**EP 0 383 652 B1**

**Patentansprüche**

1. Verfahren zum Bohren einer Platte, die nach Durchführung dieses Verfahrens eine Perforationsdichte von etwa einigen Zehntausenden von Löchern pro m² haben soll, wobei diese Bohrung mit Hilfe einer Batterie von N gleichzeitig wirkenden Werkzeugen durchgeführt wird, die schrittweise von einer Ausgangsstellung aus beweglich ist, um gleichzeitig die Bohrung einer Anzahl von N Perforationen mit einem Durchmesser "e" zu gewährleisten, wobei die N Werkzeuge der Batterie in einer durch eine erste Achse x und eine zweite Achse y definierten Ebene angeordnet sind, das darin besteht,
   - daß die N Werkzeuge der Batterie so angeordnet werden,
      . daß die Werkzeuge, die in einer zur Achse x parallelen Richtung benachbart sind, in einem Abstand dx voneinander angeordnet sind, der ein Vielfaches eines Schritts px ist, wobei px der Abstand ist, der zwischen zwei Perforationen, die in der zur Achse x parallelen Richtung benachbart sind, in der vollständig perforierten Platte vorgesehen sein soll, und
      . daß die Werkzeuge, die in einer zur Achse y parallelen Richtung benachbart sind, in einem Abstand dy voneinander angeordnet sind, der ein Vielfaches eines Schritts py ist, wobei py der Abstand ist, der zwischen zwei Perforationen, die in der zur Achse y parallelen Richtung benachbart sind, in der vollständig perforierten Platte vorgesehen sein soll,
         wobei die N Werkzeuge der Werkzeugbatterie eine Fläche Dx.Dy einnehmen, worin Dx in der Achse x gerichtet ist und ein Vielfaches des Abstands dx ist und Dy in der Achse y gerichtet ist und ein Vielfaches des Abstands dy ist,
   - daß die Platte gebohrt wird, während die Batterie von N Werkzeugen in der Ausgangsstellung ist,
   - daß die Batterie von der Ausgangsstellung aus auf einer Einzelzone Z der Platte bewegt wird, die eine Fläche Lx.Ly einnimmt, die größer als die Fläche Dx.Dy ist, wobei Lx zur Achse x und Ly zur Achse y parallel ist, wobei die Bewegung der Batterie von N Werkzeugen gemäß einer ersten Sequenz von Bewegungen im Schritt px in einer zur Achse x parallelen Richtung und von Bewegungen im Schritt py in einer zur Achse y parallelen Richtung durchgeführt wird,
   - daß die Platte bei jeder Bewegung im Schritt px und py gebohrt wird, bis die Einzelzone Z gänzlich perforiert ist,
      dadurch gekennzeichnet,
   - daß die gesamte Batterie von N Werkzeugen in einer zweiten Seuqenz von Bewegungen in einem zweiten Schritt in einer der Achsen x und y der Ebene bewegt wird, wobei dieser zweite Schritt so beschaffen ist, daß der Abstand zwischen der Ausganggstellung und einer Stellung nach diesem zweiten Schritt gleich (Lx + px) im Fall eines zweiten Schritts in der Achse x und (Ly + py) im Fall eines zweiten Schritts in der Achse y ist, wobei dieser zweite Schritt außerdem so beschatten ist daß der Abstand zwischen der Ausgangsstellung und einer Stellung nach dem zweiten Schritt gleich (Dx + dx) im Fall eines Schritts in der Achse x und gleich (Dy + dy) im Fall eines Schritts in der Achse y ist,
   - daß die Platte nach jedem zweiten Schritt gebohrt wird
   - und daß die erste und die zweite Sequenz wiederholt wird, bis die Platte vollständig perforiert ist, wobei natürlich die Stellung der Batterie von N Werkzeugen nach einem bestimmten zweiten Schritt die Ausgangsstellung für eine neue Reihe einer ersten und einer zweiten Sequenz darstellt,
      wobei das Verfahren außerdem dadurch gekennzeichnet ist, daß man zur Durchführung der Bohrung in gekrümmten Zonen der Platte die Anzahl aktiver Werkzeuge so verringert, daß, wenn die von der Batterie gebildete Ebene zur gekrümmten Zone tangential ist, die Achse der periphersten Bohrung, die von den aktiven Werkzeugen hergestellt wird, gegen die Senkrechte (H) zur Krümmung an diesem Punkt um weniger als einen zulässigen Höchstwert geneigt ist, wobei die unaktiv gehaltenen Werkzeuge am Umfang der Werkzeugbatterie gelegen sind.

2. Verfahren nach Anspruch 1, dadurch gekennzeichnet, daß der Abstand dx zwischen den Werkzeugen, die in der zur Achse x parallelen Richtung benachbart sind, und der Abstand in der zur Achse y parallelen Richtung jeweils dem Mindestachsabstand entsprechen, der zwischen zwei Werkzeugen, die in der zur Achse x parallelen Richtung und in der zur Achse y parallelen Richtung benachbart sind, unter Berücksichtigung des Durchmessers "e" der herzustellenden Perforationen bestehen kann.

3. Verfahren nach Anspruch 1 oder 2, dadurch gekennzeichnet, daß die Bewegung der Werkzeuge in ihrer ersten Bewegungssequenz in einem regelmäßigen geometrischen Muster (15) stattfindet, das vorzugsweise aus den einfachen geometrischen Mustern ausgewählt ist.

7

4.  Verfahren nach einem der vorhergehenden Ansprüche, dadurch gekennzeichnet, daß die Positionierung der Werkzeugbatterie (7) bezüglich der zu perforierenden Platte sowie ihre Bewegungen in den festgelegten Reihen der beiden Bewegungssequenzen durch ein Rechnerprogramm gesteuert werden.

5.  Verfahren nach einem der vorhergehenden Ansprüche, dadurch gekennzeichnet, daß es auf die Perforierung von Platten auf der Basis von in ein Harz eingebetteten Kunstfasern angewendet wird, wobei die Perforationen durch Werkstoffentfernung hergestellt werden.

6.  Verfahren zur Herstellung von akustischen Platten mit einer perforierten Haut (1), die auf einer Seite eines Zellen- Kernwerkstoffs (4) befestigt ist, dessen andere Seite mit einer vollen Haut (5) bedeckt ist, dadurch gekennzeichnet, daß die perforierte Haut (1) aus einem Verbundwerkstoff auf der Basis von in ein Harz eingebetteten Fasern besteht, der geformt und anschließend gemäß des Verfahrens der Ansprüche 1 oder 2 perforiert wird, bevor er an dem zellenkern befestigt wird.


## Claims

1.  Method of piercing a board which is to exhibit, once having completed the effecting of the said method, a density of perforations of the order of several tens of thousands of holes per square metre, the said piercing being carried out by means of a gang of N tools acting simultaneously, which gang of N tools can be displaced incrementally, from a start position, so as to afford simultaneously the drilling of a number N of perforations of a diameter "e", the N tools of the gang being arranged in a plane defined by a first and a second axis x and y, which consists:
    - in arranging the N tools of the gang in such a way that
        . the neighbouring tools, in a direction parallel to the x axis, are a distance dx apart, this distance dx being a multiple of an increment px, px being the distance which is to separate two neighbouring perforations once the board is fully perforated, in the direction parallel to the x axis, and such that
        . the neighbouring tools, in a direction parallel to the y axis, are a distance dy apart, this distance dy being a multiple of an increment py, py being the distance which is to separate two neighbouring perforations once the board is fully perforated, in the direction parallel to the y axis,
            the N tools of the gang of tools occupying an area Dx.Dy, where Dx is oriented along the x axis and is a multiple of the distance dx and where Dy is oriented along the y axis and is a multiple of the distance dy
    - in piercing the board while the gang of N tools is in the start position,
    - in displacing the gang from the start position over an elementary region Z of the board, the said elementary region covering an area Lx.Ly greater than the area Dx.Dy, Lx being parallel to the x axis and Ly being parallel to the y axis, the movement of the gang of N tools being carried out as a first sequence of displacements of increment px in a direction parallel to the x axis and of displacements of increment py in a direction parallel to the y axis,
    - in piercing the board after each displacement of increment px and py, until the elementary region Z is entirely perforated,
            characterized in that it consists,
    - in displacing by a second increment the whole of the gang of N tools in a second displacement sequence, along one of the x and y axes of the plane, the said second increment being such that the distance between the start position and a position after the said second increment is equal to (Lx + px), for a second increment along the x axis, and (Ly + py), for a second increment along the y axis, the said second increment being moreover such that the distance between the start position and the position after the second increment is equal to (Dx + dx) for an increment along the x axis and equal to (Dy + dy) for an increment along the y axis,
    - in piercing the board after each second increment, and
    - in repeating the first and second sequences until the board is fully perforated, it being understood that the position of the gang of N tools after a second given increment constitutes the start position for a new series of first and second sequences,
            the method being furthermore characterized in that, in order to undertake the piercing in curved regions of the board, the number of active tools is decreased in such a way that, the plane constituted by the gang being tangential to the curved region, the axis of the perforation undertaken by the most peripheral active tools is inclined by less than an admissible maximum value with respect to the normal (H) to the curve at this point, the tools kept inactive being situated at the periphery of the tool gang.

2. Method according to Claim 1, characterized in that the distance dx apart of the neighbouring tools in the direction parallel to the x axis and the distance in the direction parallel to the y axis correspond, respectively, to the minimum inter-axial gap which can separate two neighbouring tools in the direction parallel to the x axis and in the direction parallel to the y axis, given the diameter "e" of the perforations to be made.

3. Method according to Claim 1 or 2, characterized in that, in the first tool displacement sequence, the tools are displaced in accordance with a regular geometrical pattern (15) chosen preferably from the simple geometrical figures.

4. Method according to any one of the preceding claims, characterized in that the positioning of the tool gang (7) with respect to the board to be perforated, as well as its displacements in accordance with the specified series of the two displacement sequences are managed by a computer program.

5. Method according to any one of the preceding claims, characterized in that it is applied to the perforating of boards made from materials based on synthetic fibres embedded in a resin, the perforations being made by removing material.

6. Method of making acoustic panels including a perforated skin (1) fixed to one face of a material with cellular core (4), the other face of which is covered with a solid skin (5), characterized in that the perforated skin (1) is made from a composite material based on fibres embedded in a resin which is shaped then perforated according to the method of Claims 1 or 2 before being fixed to the cellular core.

FIG. 1

FIG.2

FIG.3

FIG.4

FIG.5

FIG. 6

FIG.7

EP 0 383 652 B1

FIG.8

13